# FASCICULE DE BREVET EUROPEEN

(11) **EP 0 588 683 B1**
(45) Date de publication et mention de la délivrance du brevet: **20.11.1996**
(21) Numéro de dépôt: 93402150.2
(22) Date de dépôt: 03.09.1993
(51) Int. Cl.: B62B 3/00, F16B 9/02

(54) **Dispositif de fixation de panneau pour conteneur roulant, panneau amovible et conteneur roulant correspondants**
Befestigungsvorrichtung für eine Platte an einem fahrbaren Behälter, abnehmbare Platte und fahrbarer Behälter dafür
Device for mounting a panel on a rolling container, removable panel and rolling container therefore

(30) Priorité: 18.09.1992 FR 9211140
(43) Date de publication de la demande: 23.03.1994
(73) Titulaire: ATELIERS REUNIS CADDIE, F-67300 Schiltigheim (FR)
(72) Inventeur: Joseph, Alice, F-67300 Schiltigheim (FR); Le Marchand, Alain, F-67116 Reichstett (FR); Vierling, Jean-Paul, F-67760 Gambsheim (FR)
(74) Mandataire: Boutin, Antoine

(56) Documents cités:
- EP-A- 0 305 224
- EP-A- 0 320 318
- DE-A- 3 917 279
- FR-A- 1 572 822
- US-A- 5 154 359

## Description

L'invention est relative à un chariot ou conteneur roulant ou autre moyen de manutention, mobile ou non, à un panneau amovible et à un panneau latéral amovible pour chariot ou conteneur roulant, selon les premières parties des revendications 1 et 7.
Un tel chariot et panneau est connu des documents DE-A-3 917 279 et EP-A-0 320 318.

L'invention est particulièrement utile pour la manutention et le transport d'articles et de produits de dimensions variées, puis le chargement des conteneurs en tant que charges unitaires à l'intérieur de camions ou véhicules de transport analogues.

L'invention a pour but d'améliorer le positionnement, l'encastrement et la fixation de panneaux latéraux sur une plate-forme roulante grâce à un nouveau dispositif de structure simple et de fabrication économique.

L'invention a pour objet un chariot ou conteneur roulant ou autre moyen de manutention, mobile ou non, particulièrement pour la manutention et le transport d'articles et de produits de dimensions variées, du type comportant une plate-forme, ladite plate-forme étant constituée à partir de pièces en équerre et de tubes ouverts à leur extrémité inférieure ; et comportant en outre au moins un panneau latéral amovible ; une première partie mâle du panneau latéral étant engagée dans une deuxième partie femelle tubulaire de la plate-forme, caractérisé en ce qu'une forme en équerre est solidaire de ladite première partie mâle, en ce que cette forme en équerre présente une extrémité filetée s'engageant dans ladite deuxième partie femelle tubulaire, et en ce que la forme en équerre est retenue sur ladite deuxième partie femelle tubulaire par un moyen de fixation.

Selon d'autres caractéristiques supplémentaires de l'invention :
- la première partie mâle comporte un tube présentant une section telle que le contour de l'ensemble comportant l'extrémité filetée, le tube et les soudures d'assemblage de la forme en équerre sur le tube soit contenu dans une forme cylindrique ;
- la forme en équerre un fil métallique courbé sensiblement, à angle droit et retenant le panneau latérale sur la plate-forme ;
- le moyen de fixation est constitué par une rondelle taraudée de diamètre supérieur au diamètre extérieur du tube ;
- le moyen de fixation comporte un écrou et une rondelle comportant une fente orientée sensiblement radialement ;
- le chariot comporte au moins deux panneaux latéraux fixés sur la plate-forme.

L'invention a également pour objet un panneau latéral amovible pour conteneur roulant ou chariot, destiné à être assemblé sur une plate-forme dudit conteneur roulant ou chariot par engagement d'une première partie mâle du panneau latéral dans une deuxième partie femelle tubulaire de la plate-forme, caractérisé en ce qu'une forme en équerre est solidaire de ladite première partie mâle, en ce que cette forme en équerre présente une extrémité filetée s'engageant dans ladite deuxième partie femelle tubulaire, et en ce que la forme en équerre est retenue sur ladite deuxième partie femelle tubulaire par un moyen de fixation.

Selon d'autres caractéristiques supplémentaires de l'invention :
- ladite première partie mâle est consituée par un ensemble comprenant un tube, un fil d'équerre et des soudures correspondantes, ledit ensemble étant contenu dans une forme cylindrique et le fil d'équerre présentant une extrémité filetée apte à recevoir un écrou de fixation ou pièce analogue présentant un taraudage apte à coopérer avec le filetage du fil d'équerre ;
- le tube dudit ensemble présente sur toute sa longeur, une section sensiblement "en trois quart de cercle" ou une section analogue présentant un enfoncement constant, correspondant à l'assemblage de fils métalliques au tube de manière à contenir les extrémités des fils, les soudures d'assemblage et le tube dans un cylindre ;
- un fil métallique de retenue courbé deux fois sensiblement à l'équerre pour présenter une conformation en U est soudé à deux tubes formant montants latéraux et en ce que les extrémités de la conformation en U sont filetées.

L'invention sera mieux comprise grâce à la description qui va suivre donnée à titre d'exemple non limitatif au regard des dessins annexés dans lesquels :
Les figures 1 et 2 représentent schématiquement des dispositifs de fixation de l'art antérieur.
La figure 3 représente schématiquement une vue latérale d'un dispositif de fixation selon l'invention.
Les figures 4 et 5 représentent de vues schématiques en coupe respectivement selon les lignes IV-IV et V-V de la figure 3.
Les figures 6 et 7 représentent schématiquement une vue en coupe selon la ligne VI-VI et une vue latérale d'un deuxième mode de réalisation de l'invention.
Les figures 8 à 10 représentent schématiquement une vue en coupe selon la ligne VIII-VIII, une vue latérale et une vue partielle en perspective d'un troisième mode de réalisation de l'invention.

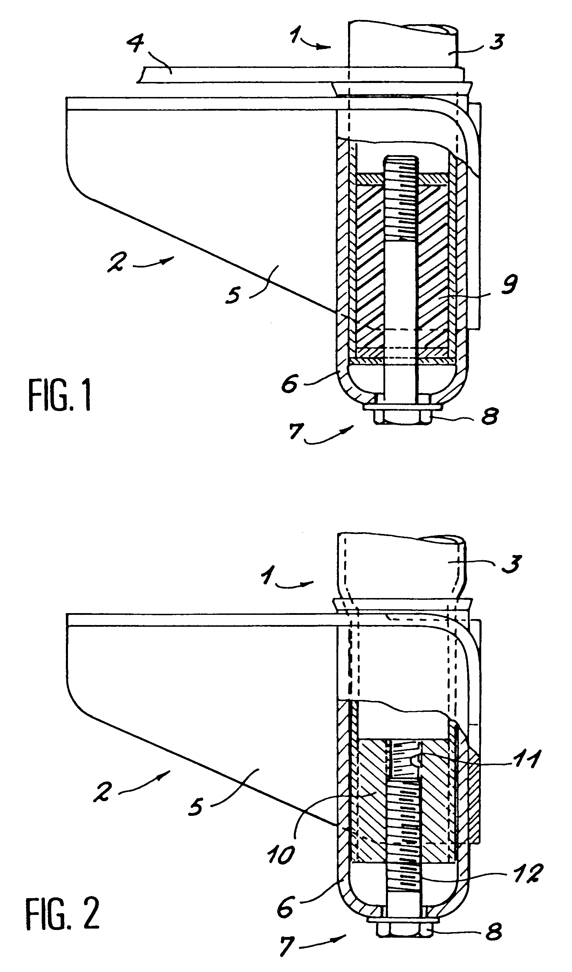

En référence aux figures 1 et 2, un panneau latéral 1 est emboîté sur une plate-forme 2 munie de roulettes non représentées.

Le panneau latéral 1 est constitué par assemblage de tube métallique 3 et de fil métallique 4.

La plate-forme 2 est constituée à partir de pièces en équerre 5 aux angles desquelles sont assemblés des tubes 6 fermés et percés à leur extrémité inférieure 7 d'un trou correspondant au passage d'une vis ou d'un boulon 8.

Le tube 3 se prolonge par une partie de diamètre correspondant à l'engagement sur une longueur prédéterminée à l'intérieur du tube 6.

Sur la figure 1, le tube 3 est retenu à l'intérieur du tube 6 par un moyen de fixation expansible 9, tandis que sur la figure 2 une douille 10 soudée à l'intérieur du prolongement du tube 3 présente un taraudage 11 au moyen duquel le filetage 12 de la vis 8 retient le panneau latéral 1 en position sur la plate-forme 2.

Ainsi, selon l'art antérieur, les portions de prolongement du tube 3 nécessitent une mise en forme particulière telle qu'un rétreint du diamètre du tube 3 ou le soudage d'un fil de retenue 4, et une pièce supplémentaire telle qu'une douille 10 ou un moyen 9 de fixation par expansion.

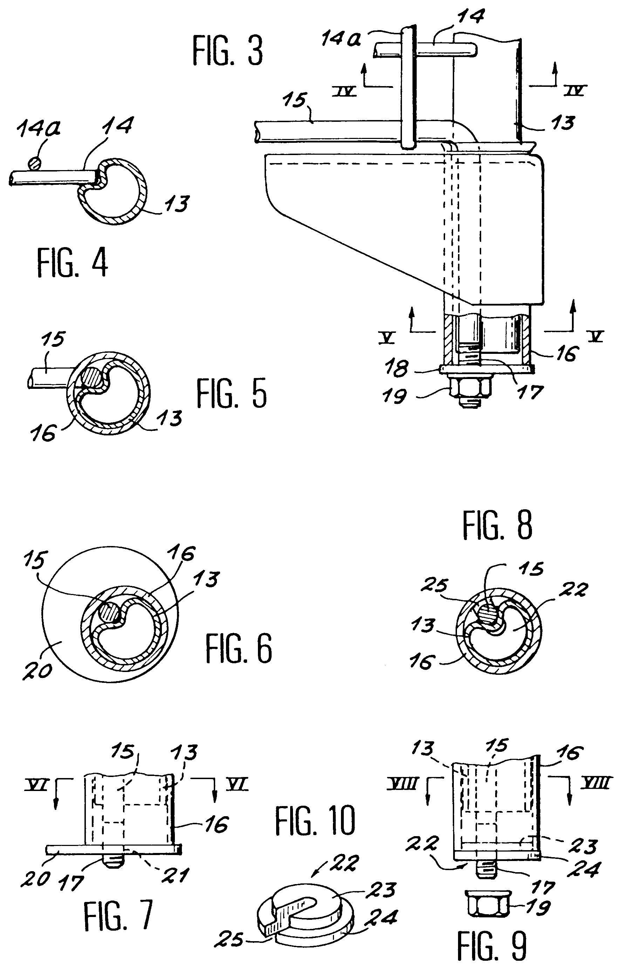

En référence aux figures 3 à 5, selon l'invention, le tube 13 d'un panneau latéral présente une section représentée aux figures 4 et 5 sensiblement en forme de "trois quarts de cercle".

La section 13 correspond à la fois à l'assemblage par soudage d'un fil métallique 14 de cloison latérale sur le tube 13 et à l'assemblage d'un fil métallique 15 de retenue plié sensiblement à angle droit.

Ainsi, selon l'invention, le contour de l'ensemble représenté par le tube 13, un fil 14 et les soudures de fixation correspondantes ainsi que le contour de l'ensemble représenté par le tube 13, le fil d'équerre 15 et les soudures correspondantes est contenu dans une forme cylindrique : tout risque d'accrochage de produit transporté ou de vêtement d'un manutentionnaire est ainsi supprimé.

De plus, le fait de pratiquer un enfoncement constant sur toute la longueur du tube 13 pour lui donner une section "en trois quarts de cercle" simplifie les opérations de fabrication et supprime les pièces coûteuses 9 et 10 de l'art antérieur.

Avantageusement, selon l'invention, le tube 16 de la plate-forme roulante n'est pas fermé à son extrémité inférieure. Dans ce cas, en prévoyant un filetage 17 sur l'extrémité du fil en équerre 15, on fixe le panneau latéral au moyen d'une rondelle d'appui 18 sur le tube 16 et d'un écrou 19 correspondant.

Ainsi, le panneau latéral est retenu (par le fil en équerre 15 fileté à son extrémité) sur la plate-forme roulante par la rondelle 18 prise entre le tube 16 et l'écrou 19.

De préférence le fil de retenue 15 présente une forme en U dont l'écartement des branches correspond à l'écartement de l'intérieur de deux tubes correspondants aux angles de la plate-forme : dans ce cas, l'engagement des extrémités de la forme en U du fil 15 assure tout d'abord un centrage précis et un positionnement du panneau latéral sur la plate-forme ; ensuite, le dépassement des extrémités filetées 17 permet de vérifier l'enfoncement des deux tubes 13 dans les deux tubes 16 correspondants enfin, le serrage équilibré des écrous 19 assure une fixation ferme sans contrainte excessive du panneau latéral sur la plate-forme roulante pour constituer ainsi un conteneur ou chariot roulant de manutention.

En référence aux figures 6 et 7, les éléments identiques ou similaires sont repérés par des chiffres identiques à ceux des figures 3 à 5.

Dans ce mode de réalisation, une pièce 20, par exemple en forme de disque sensiblement plat, présente un taraudage central 21 apte à coopérer avec le filetage 17 du fil de retenu 15.

Le diamètre du disque 20 est supérieur à celui du tube 16 de manière à dépasser au moins d'un côté et à être vissé ou dévissé manuellement.

Dans ce mode de réalisation, la pièce 20 remplit simultanément les fonctions de la rondelle 18 et de l'écrou 19 de la figure 3 tout en évitant l'usage d'une clef ou d'un outil analogue pour sa manoeuvre.

En référence aux figures 8 à 10, une rondelle 22 présente une conformation constituée de deux disques solidaires 23 et 24 présentant une fente 25 orientée sensiblement radialement.

Le disque 23 est adapté pour rentrer à l'intérieur du tube 16 et présente à cet effet un diamètre légèrement inférieur, tandis que le disque 24 est adapté pour prendre appui sur l'extrémité du tube 16 et présente par exemple un diamètre sensiblement égal au diamètre extérieur du tube 16.

La fente 25 permet le passage de l'extrémité filetée 17 tout en assurant la retenue (et l'appui après serrage) de l'écrou 19.

Dans ce mode de réalisation l'écrou 19 peut être rendu imperdable sur l'extrémité filetée 17 : en effet, après avoir dévissé l'ecrou 19 d'une hauteur correspondant sensiblement à la hauteur du disque 23, on abaisse la rondelle 22 vers le bas puis on retire la rondelle 22 en faisant coulisser la fente 25 autour de l'extrémité filetée 17 du fil métallique 15.

Ainsi, l'écrou 19 restant en place, on peut retirer le panneau latéral par simple traction vers le haut.

L'invention s'applique également à tout chariot, conteneur ou autre moyen de manutention, mobile ou non, comportant des panneaux latéraux amovibles selon l'invention.

## Revendications

1. Chariot ou conteneur roulant ou autre moyen de manutention, mobile ou non, particulièrement pour la manutention et le transport d'articles et de produits de dimensions variées, du type comportant une plate-forme, ladite plate-forme étant constituée à partir de pièces en équerre (5) et de tubes (16) ouverts à leur extrémité inférieure ; et comportant en outre au moins un panneau latéral amovible ; une première partie mâle (13) du panneau latéral étant engagée dans une deuxième partie femelle (16) tubulaire de la plate-forme, caractérisé en ce qu'une forme en équerre (15) est solidaire de ladite première partie mâle (13), en ce que cette forme en équerre (15) présente une extrémité filetée (17) s'engageant dans ladite deuxième partie femelle tubulaire (16), et en ce que la forme en équerre (15) est retenue sur ladite deuxième partie femelle (16) tubulaire par un moyen de fixation (18-19, 20-21, 22-19).

2. Chariot ou conteneur roulant selon la revendication 1, caractérisé en ce que la première partie mâle comporte un tube (13) présentant une section telle que le contour de l'ensemble comportant l'extrémité filetée (17), le tube (13) et les soudures d'assemblage de la forme en équerre sur le tube (13) soit contenu dans une forme cylindrique (16).

3. Chariot selon la revendication 1 ou la revendication 2, caractérisé en ce que la forme en équerre (15) est un fil métallique (15) courbé sensiblement à angle droit et retenant le panneau latéral sur la plate-forme.

4. Chariot ou conteneur roulant selon l'une des revendications précédentes, caractérisé en ce que le moyen de fixation est constitué par une rondelle taraudée (20) de diamètre supérieur au diamètre extérieur du tube (16).

5. Chariot ou conteneur roulant selon l'une des revendications 1 à 3, caractérisé en ce que le moyen de fixation comporte un écrou (19) et une rondelle (22) comportant une fente (25) orientée sensiblement radialement.

6. Chariot ou conteneur roulant selon l'une des revendications précédentes, caractérisé en ce que le chariot comporte au moins deux panneaux latéraux fixés sur la plate-forme.

7. Panneau latérale amovible pour conteneur roulant ou chariot, destiné à être assemblé sur une plate-forme dudit conteneur roulant ou chariot par engagement d'une première partie mâle (13) du panneau latéral dans une deuxième partie femelle (16) tubulaire de la plate-forme, caractérisé en ce qu'une forme en équerre (15) est solidaire de ladite première partie mâle (13), en ce que cette forme en équerre (15) présente une extrémité filetée (17) s'engageant dans ladite deuxième partie femelle tubulaire (16), et en ce que la forme en équerre (15) est retenue sur ladite deuxième partie femelle (16) tubulaire par un moyen de fixation (18-19, 20-21, 22-19).

8. Panneau latéral selon la revendication 7, du type constitué par un assemblage de tubes et de fils métalliques, caractérisé en ce que ladite première partie mâle est constituée par un ensemble comprenant un tube (13) , un fil d'équerre (15) et des soudures correspondantes, ledit ensemble étant contenu dans une forme cylindrique et le fil d'équerre (15) présentant une extrémité filetée (17) apte à recevoir un écrou (19) de fixation ou pièce (20) analogue présentant un taraudage (21) apte à coopérer avec le filetage (17) du fil d'équerre (15).

9. Panneau latéral selon la revendication 8, caractérisé en ce que le tube (13) dudit ensemble présente sur toute sa longeur, une section sensiblement "en trois quart de cercle" (figures 4, 5, 6 et 8) ou une section analogue présentant un enfoncement constant, correspondant à l'assemblage de fils métalliques (14, 15) au tube (13) de manière à contenir les extrémités des fils (14, 15), les soudures d'assemblage et le tube (13) dans un cylindre.

10. Panneau latéral selon l'une des revendications 7 à 9, comportant un fil métallique (15) de retenue courbé deux fois sensiblement à l'équerre pour présenter une conformation en U, caractérisé en ce que ledit fil métallique (15) présentant une conformation en U est soudé à deux tubes (13) formant montants latéraux et en ce que les extrémités de la conformation en U sont filetées (17).

## Claims

1. Trolley or rolling container or other handling means, movable or not, in particular for handling and transporting articles and goods of varying dimensions of the type comprising a platform, said platform comprising angled brackets (5) and tubes (16) open at their lower end and also comprising at least one removable side panel, a first male part (13) of the side panel being engaged in a second tubular female part (16) of the platform, characterised in that an angled bracket (15) is encompassed in said first male part (13), and in that this angled bracket (15) has a screw end (17) engaging in the said second tubular female part (16), and in that the angled bracket (15) is held on the said second tubular female part (16) by a securing means (18-19, 20-21, 22-19).

2. Trolley or rolling container according to claim 1, characterised in that the first male part comprises a tube (13) having a cross section in which the outline of the assembly comprising the screw end (17), the tube (13) and the assembly welds of the angled bracket on the tube (13) is contained in a cylindrical body (16).

3. Trolley according to claim 1 or claim 2, characterised in that the angled bracket (15) is a metal wire (15) bent approximately at right angles and holding the side panel on the platform.

4. Trolley or rolling container according to one of the preceding claims, characterised in that the securing means is comprised by a screw washer (20) of greater diameter than the outer diameter of the tube (16).

5. Trolley or rolling container according to one of claims 1 to 3, characterised in that the securing means comprises a nut (19) and a washer (22) comprising a slit (25) orientated approximately radially.

6. Trolley or rolling container according to one of the preceding claims, characterised in that the trolley comprises at least two side panels secured onto the platform.

7. Removable side panel for a rolling container or trolley designed to be assembled on a platform of the said rolling container or trolley by the engagement of a first male part (13) of the side panel in a second tubular female part (16) of the platform, characterised in that an angled bracket (15) is encompassed in the said first male part (13), in that the angled bracket (15) has a screw end (17) engaging with the said second tubular female part (16), and in that the angled bracket (15) is held on the said second tubular female part (16) by a securing means (18-19, 20-21, 22-19).

8. Side panel according to claim 7 of the type comprising an assembly of tubes and metal wires, characterised in that the said first male part comprises an assembly of a tube (13), an angled wire (15) and corresponding welds, said assembly being contained in a cylindrical body and the angled wire (15) having a screw end (17) capable of connecting with a securing nut (19) or similar part (20) having an internal screw thread (21) corresponding with the screw end (17) of the angled wire (15).

9. Side panel according to claim 8, characterised in that all along its length the tube (13) of the said assembly has a cross section that is almost "three quarters of a circle" (figures 4, 5, 6 and 8) or a similar cross section that is constantly indented to correspond with the assembly of metal wires (14, 15) in the tube (13) so as to encompass the ends of the wires (14, 15), the assembly welds and the tube (13) in a cylinder.

10. Side panel according to one of claims 7 to 9, comprising a securing metal wire (15) bent twice approximately at right angles to form a U shape, characterised in that the said metal wire (15) forming a U is welded to two tubes (13) forming side mounts, and in that the U shape has screw ends (17).

## Patentansprüche

1. Wagen oder fahrbarer Behälter oder sonstiges verfahrbares oder nicht verfahrbares Beförderungsmittel, insbesondere für die Beförderung und den Transport von Artikeln und Produkten unterschiedlicher Abmessungen, der eine Plattform aufweist, wobei die genannte Plattform aus Winkelstücken (5) und an ihrem unteren Ende offenen Rohrstücken (16) besteht, und der ferner mindestens eine abnehmbare Seitenplatte aufweist, wobei sich ein erster Steckteil (13) der Seitenplatte in einem zweiten, rohrförmigen Aufnahmeteil (16) der Plattform in Eingriff befindet,
dadurch gekennzeichnet,
daß eine Winkelform (15) mit dem genannten ersten Steckteil (13) fest verbunden ist, daß diese Winkelform (15) ein Gewindeende (17) aufweist, das in dem genannten zweiten, rohrförmigen Aufnahmeteil (16) in Eingriff kommt, und daß die Winkelform (15) an dem genannten zweiten, rohrförmigen Aufnahmeteil (16) durch ein Befestigungsmittel (18-19, 20-21, 22-19) festgehalten wird.

2. Wagen oder fahrbarer Behälter nach Anspruch 1, dadurch gekennzeichnet, daß der erste Steckteil aus einem Rohr (13) besteht, das einen Querschnitt dergestalt aufweist, daß die Kontur des aus dem Gewindeende (17), dem Rohr (13) und den Montageschweißnähten der Winkelform auf dem Rohr (13) bestehenden Ganzen in einer zylindrischen Form (16) Aufnahme findet.

3. Wagen nach Anspruch 1 oder Anspruch 2, dadurch gekennzeichnet, daß die Winkelform (15) ein Metalldraht (15) ist, der im wesentlichen im rechten Winkel gebogen ist und die Seitenplatte an der Plattform befestigt.

4. Wagen oder fahrbarer Behälter nach einem der vorherigen Ansprüche, dadurch gekennzeichnet, daß das Befestigungsmittel aus einer Unterlegscheibe mit Innengewinde (20) besteht, deren Durchmesser größer ist als der Außendurchmesser des Rohrs (16).

5. Wagen oder fahrbarer Behälter nach einem der Ansprüche 1 bis 3, dadurch gekennzeichnet, daß das Befestigungsmittel aus einer Mutter (19) und einer Unterlegscheibe (22) mit einem Schlitz (25) besteht, der im wesentlichen in radialer Richtung ausgerichtet ist.

6. Wagen oder fahrbarer Behälter nach einem der vorherigen Ansprüche, dadurch gekennzeichnet, daß der Wagen mindestens zwei Seitenplatten aufweist, die an der Plattform befestigt sind.

7. Abnehmbare Seitenplatte für einen fahrbaren Behälter oder Wagen, die dazu vorgesehen ist, an einer Plattform des genannten fahrbaren Behälters oder Wagens durch Eingreifen eines ersten Steckteils (13) der Seitenplatte in einem zweiten, rohrförmigen Aufnahmeteil (16) der Plattform angebaut zu werden, dadurch gekennzeichnet, daß eine Winkelform (15) fest mit dem genannten ersten Steckteil (13) verbunden ist, daß diese Winkelform (15) ein Gewindeende (17) aufweist, das in dem genannten zweiten, rohrförmigen Aufnahmeteil (16) in Eingriff kommt, und daß die Winkelform (15) an dem genannten zweiten, rohrförmigen Aufnahmeteil (16) durch ein Befestigungsmittel (18-19, 20-21, 22-19) festgehalten wird.

8. Seitenplatte nach Anspruch 7, die aus zusammengesetzten Rohren und Metalldrähten besteht, dadurch gekennzeichnet, daß der genannte erste Steckteil aus einer Gesamtanordnung besteht, die ein Rohr (13), einen Winkeldraht (15) und entsprechende Schweißnähte umfaßt, wobei diese Gesamtanordnung in einer zylindrischen Form Aufnahme findet und der Winkeldraht (15) ein Gewindeende (17) aufweist, das eine Befestigungsmutter (19) oder ein analoges Stück (20) mit einem Innengewinde (21) aufnehmen kann, welches geeignet ist, mit dem Gewinde (17) des Winkeldrahts (15) zusammenzuwirken.

9. Seitenplatte nach Anspruch 8, dadurch gekennzeichnet, daß das Rohr (13) der genannten Gesamtanordnung über seine gesamte Länge hinweg einen Querschnitt, der im wesentlichen "Dreiviertel eines Kreises" bildet (Figuren 4, 5, 6 und 8), oder einen analogen Querschnitt hat, der eine durchgehende Vertiefung aufweist, und der dem Zusammenbau der Metalldrähte (14, 15) mit dem Rohr (13) dergestalt entspricht, daß er die Enden der Drähte (14, 15), die Montageschweißnähte und das Rohr (13) in einem Zylinder enthält.

10. Seitenplatte nach einem der Ansprüche 7 bis 9, bestehend aus einem Sperr-Metalldraht (15), der zweimal im wesentlichen winkelig gebogen ist, so daß er U-förmig ausgeführt ist, dadurch gekennzeichnet, daß der genannte, U-förmig ausgeführte Metalldraht (15) an zwei Rohren (13) angeschweißt ist, die Seitenstützen bilden, und daß die Enden der U-förmigen Ausführung Gewinde (17) aufweisen.
